# EUROPÄISCHE PATENTANMELDUNG

(11) **EP 2 187 617 A1**
(43) Veröffentlichungstag der Anmeldung: **19.05.2010**
(21) Anmeldenummer: 09176181.7
(22) Anmeldetag: 17.11.2009
(51) Int. Cl.: H04N 3/15

(54) **Anordnung zur flugkörpergestützten Bilddatenaufnahme von der Oberfläche eines Himmelskörpers**

(30) Priorität: 18.11.2008 DE 102008058311
(71) Anmelder: Jena-Optronik GmbH, 07745 Jena (DE)
(72) Erfinder: Fritsch, Holger, 07749, Jena (DE)
(74) Vertreter: Freitag, Joachim

(57) **Zusammenfassung**

Die Erfindung betrifft eine Anordnung zur Bilddatenaufnahme von Himmelskörpern durch satellitengestützte Instrumente.

Die Aufgabe, eine neue Möglichkeit für die Bildaufnahme zur Fernerkundung von Himmelskörpern zu finden, die eine große Schwadweite gestattet, ohne dass bei der Verknüpfung von mehreren separaten Aufnahmesystemen innerhalb des aufzunehmenden Abtastfeldes (Field of View - FoV) unterschiedliche Verzerrungen der Einzelaufnahmen entstehen, die eine nachfolgende Co-Registrierung der Bilddaten, wird erfindungsgemäß gelöst, indem mindestens zwei separate Kameras (1) mit zueinander parallelen optischen Achsen (11) zur Aufnahme desselben Gesichtsfeldes (21) angeordnet sind, so dass sie Fokalebenen (12) mit inhaltsgleichen Bildern des Gesichtsfeldes (21) von der Oberfläche des Himmelskörpers (2) aufweisen, und in der Fokalebene (12) jeder Kamera (1) Sensorchips (15) so angeordnet sind, dass eine aufgrund der beschränkten Fläche des aktiven Sensorarrays (14) des mindestens einen Sensorchips (15) in der Fokalebene (12) innerhalb einer ersten Kamera (1) vorhandene Abtastlücke durch das Anordnen von wenigstens einem komplementär versetzt positionierten aktiven Sensorarray (14) eines Sensorchips (15) in der abbildungsgleichen Fokalebene (12) mindestens einer zweiten Kamera (1) ausgefüllt ist, so dass das gesamte für die jeweilige Anwendung aufzunehmende Bild des Gesichtsfeldes (21) lückenlos erfassbar ist.

## Beschreibung

Die Erfindung betrifft eine Anordnung zur flugkörpergestützten Bilddatenaufnahme von der Oberfläche eines Himmelskörpers, bei der ein optisch abbildendes Instrument mehrere Sensorarrays aufweist, um für jeden Überflug das Gesichtsfeld der Bildaufnahme in Flugrichtung oder quer dazu unter Beibehaltung der erforderlichen Auflösung zu vergrößern
Sie findet vorwiegend Anwendung zur Erleichterung der Co-Registrierung von mehrkanalig (z.B. spektral oder polarisationsoptisch unterschiedlich) aufgenommenen Bilddaten von der Oberfläche eines Himmelskörpers, insbesondere der Erde.

Für satellitengestützte optische Beobachtungsinstrumente zur Aufnahme der Oberfläche von Himmelskörpern wird häufig eine hohe Flächenabdeckung gefordert.
Zur Charakterisierung des Abtastfeldes bei einer Sensorauslesung wird der Begriff Schwadweite eingeführt und so verstanden, dass zusätzlich zum herkömmlich benutzten Begriff der Schwadbreite als Breite der Abtastspur satellitengestützter Instrumente quer zur Flugrichtung (accross track - ACT)eine Abtastlänge in Flugrichtung (along track - ALT) definiert ist, um das gesamte Gesichtsfeld (Field of View) einer Sensorarrayauslesung zu beschreiben. Die Breite der Abtastspur (ACT) wird im Folgenden mit "ACT-Schwadweite" und die Länge der Abtastfensters (ALT) mit "ALT-Schwadweite" bezeichnet.

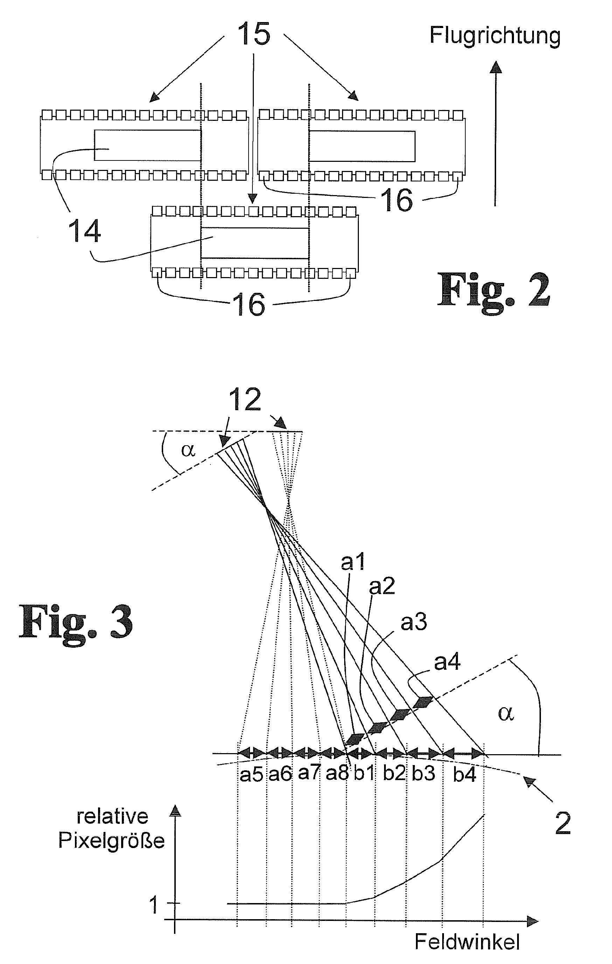

Im Stand der Technik der satellitengestützten Instrumente kommen beispielsweise Pushbroom-Abtastsysteme zum Einsatz, die auf einer Kamera mit einem einzelnen Sensor (Matrix- oder Zeilenarray) basieren. Diese sind häufig nicht ausreichend, so dass mehrere Sensorarrays aneinandergesetzt werden, um beispielsweise die ACT-Schwadweite zu vergrößern.
Eine solche Maßnahme, wie sie z.B. von C.J. DIGENIS et al. in dem NASA-Report "Advanced Land Imager" (EO-1 Technology Validation Report, MIT Lincoln Laboratory, Aug. 2001, S. 2 ff.) offenbart wurde, ist schematisch in Fig. 2 dargestellt. Dabei sind versetzt zueinander angeordnete Sensorchips 15 eingesetzt, die aufgrund von notwendigen elektronischen Anschlüssen 16 ein wesentlich kleineres lichtempfindliches Sensorarray 14 aufweisen, so dass sich die Sensorchips 15 überlappen und somit wenigstens zweireihig angeordnet werden müssen. Dabei kann sich der örtliche Versatz als nachteilig erweisen. Durch die zeitlich versetzte Aufnahme der Bilddaten mit den zueinander versetzten Sensorarrays sinkt die Güte der temporären Co-Registrierung.

Ein anderer Lösungsansatz, um eine größere ACT-Schwadweite zu erreichen, wird in einem ESA-Report ("MERIS Detailed Instrument Description", Issue 1.0, 14. April 2006, S. 17 ff.) beschrieben und besteht darin, mehrere Kameras mit je einem Sensorarray fächerförmig anzuordnen. Zur Abdeckung des gesamten Gesichtsfeldes des optischen Instruments sind gemäß ESA-Report fünf Kameras fächerförmig so angeordnet, dass sich deren Abbildungsstrahlengänge kreuzen, um im Kreuzungspunkt ein und dasselbe optische Filtersystem nutzen zu können (siehe a.a.O., S. 19). In diesem Fall weist nur die mittlere der fünf Kameras keine Verkippung auf. Die anderen Kameras weisen gegenüber dem Lot auf die Objektebene Neigungwinkel ihrer optischen Achsen auf.

Der Begriff "optische Achse" stellt dabei im klassischen Sinne eine Gerade dar, die mit der Symmetrieachse eines reflektierenden oder refraktiven optischen Elements übereinstimmt (siehe z.B. Brockhaus Universallexikon von A-Z in 26 Bänden ISBN: 3-411-03036-4, S. 5393). In Spezialfällen, z.B. bei einem Offset-Parabolspiegel, stimmt jedoch die optische Achse des Systems nicht notwendigerweise mit dessen Symmetrieachse überein. Im Fall von Off-Axis-Freiformoptiken kann die optische Achse nicht einmal mehr durch eine Normale auf den Scheitelpunkt einer Rotationsfläche beschrieben werden, wie das noch bei einem Off-Axis Parabolspiegel der Fall wäre. Für den somit nicht einheitlichen Begriff "optische Achse" sollen deshalb für beliebige optische Kamerasysteme folgende eindeutige vereinheitlichte Festlegung getroffen werden:
1) Die Gesamtheit der Abbildungseigenschaften eines realen optischen Systems sei durch ein virtuelles symmetrisches System darstellbar.
2) Für das virtuelle symmetrische System wird die optische Achse im klassischen Sinne als Symmetrieachse des Systems definiert.

Fig. 3 zeigt schematisch die sich aus der Neigung der optischen Achsen der Kameras ergebenden Verzerrungsverhältnisse innerhalb des Gesamtgesichtsfeldes für eine außermittige, verkippte Kamera analog der im obigen ESA-Report erwähnten Konstellation aus fünf fächerförmig angeordneten Kameras. Zur zeichnerischen Vereinfachung wird in Fig.3 die Oberflächenkrümmung des Himmelskörpers vernachlässigt und nur die Tangentialebene betrachtet, so dass der Einfluss der Krümmung des Himmelskörpers auf die Abbildungsverzerrung in dieser Beschreibung zunächst unberücksichtigt bleibt.

Bei einem System, das das geforderte Gesamtgesichtsfeld mit einer einzelnen Kamera abdeckt, würden keinerlei Verzerrungen auftreten und somit die Bildpunkte a5, a6, a7 und a8 gleich groß sein. Diese Verzerrungsfreiheit ist innerhalb des Gesichtsfeldes einer um den Winkel α geneigten Kamera nicht mehr gegeben. Wie in Fig. 3 dargestellt, sind die in einer zur Fokalebene parallelen virtuellen Ebene liegende Bildpunkte a1, a2, a3 und a4 gleich groß und verzerrungsfrei. Die realen Bildpunkte b1, b2, b3, und b4 in der Tangentialebene des abzubildenden Himmelskörpers 2 zeigen dagegen eine zum Rand der Schwadweite 3 hin (sowohl ACT als auch ALT) eine vergrößerte Pixelfläche. Diese Verzerrung ist abhängig vom Winkel α, der für jeden von jeweils einer Kamera 1 abgedeckten Teilbereich der Schwadweite 3 unterschiedlich ist und damit zu einer sprunghaften Änderung der Verzerrung innerhalb der gesamten Schwadweite 3 führt.
Viele Aufgaben der Fernerkundung von Himmelskörpern lassen sich jedoch nur lösen, indem ein- und dasselbe Objektpixel auf der Oberfläche des Himmelskörpers unter verschiedenen Bedingungen (Spektralbereich, Polarisationsrichtung, Blickrichtung) aufgenommen wird. Dabei ist es essentiell wichtig, dass die in unterschiedlichen Wellenlängen und gegebenenfalls bei optisch unterschiedlicher Polarisationsrichtung aufgenommenen Pixeldaten vor der weiteren Verarbeitung exakt übereinander gelegt werden. Ziel ist es also, die Punkt-Verwaschungs-Funktionen (PSF - Point Spread Function) der einzelnen Aufnahmen zu einem möglichst großen Prozentsatz in Übereinstimmung zu bringen. Die Überlagerung (Zuordnung von Pixeln gleicher Ortslage auf der Oberfläche des Himmelskörpers) der einzelnen Bildaufnahmen wird als Co-Registrierung bezeichnet, die eine bestimmte Güte der Überdeckung der PSFs der einzelnen Aufnahmen ein- und desselben Zielbereiches aufweisen muss.
Die Verzerrungseffekte durch die oben beschriebene Neigung der optischen Achse führen bei konstanter Größe der Sensorelemente in der Sensorebene zu unterschiedlich großen Objektpixeln, die bei der Projektion von der Oberfläche des Himmelskörpers erfasst werden, und damit zu unterschiedlichen PSFs der Pixel. Bereits durch die unterschiedliche Größe der PSFs ergibt sich zwangsläufig eine schlechte Co-Registrierung der einzelnen zu überlagernden, sich überlappenden Bildaufnahmen.

Die fächerförmige Anordnung von Kameras zur Vergrößerung der Schwadweite führt also aufgrund der Verkippung (Neigung) der optischen Achsen der Kameras zu unnötigen Abbildungsverzerrungen, die eine Co-Registrierung der Bilddaten erheblich erschweren.

Der Erfindung liegt die Aufgabe zugrunde, eine neue Möglichkeit für die Bildaufnahme zur Fernerkundung von Himmelskörpern zu finden, die eine große Schwadweite gestattet, ohne dass bei der Verknüpfung von mehreren separaten Aufnahmesystemen innerhalb des aufzunehmenden Abtastfeldes (Field of View - FoV) unterschiedliche Verzerrungen der Einzelaufnahmen entstehen, die eine nachfolgende Co-Registrierung der Bilddaten erschweren.

Erfindungsgemäß wird die Aufgabe bei einer Anordnung zur flugkörpergestützten Bilddatenaufnahme von der Oberfläche eines Himmelskörpers, bei der ein optisch abbildendes Instrument mehrere Sensorarrays aufweist, um für jeden Überflug das Gesichtsfeld der Bildaufnahme in Flugrichtung oder quer dazu unter Beibehaltung der erforderlichen Auflösung zu vergrößern, dadurch gelöst, dass mindestens zwei separate Kameras mit zueinander parallelen optischen Achsen zur Aufnahme desselben Gesichtsfeldes angeordnet sind, so dass sie Fokalebenen mit inhaltsgleichen Bildern des Gesichtsfeldes von der Oberfläche des Himmelskörpers aufweisen, und dass in der Fokalebene jeder Kamera Sensorchips so angeordnet sind, dass eine aufgrund der beschränkten Fläche des aktiven Sensorarrays des mindestens einen Sensorchips in der Fokalebene innerhalb einer ersten Kamera vorhandene Abtastlücke durch das Anordnen von wenigstens einem komplementär versetzt positionierten aktiven Sensorarray eines Sensorchips in der abbildungsgleichen Fokalebene mindestens einer zweiten Kamera ausgefüllt ist, so dass das gesamte für die jeweilige Anwendung aufzunehmende Bild des Gesichtsfeldes lückenlos aufnehmbar ist.

Vorteilhaft sind die Sensorarrays so angeordnet, dass die Kombination von Bildaufnahmen der separaten Kameras das gesamte für die jeweilige Anwendung aufzunehmende Gesichtsfeld ohne Überlappungen lückenlos abbildet. Die Sensorarrays können aber auch zweckmäßig so angeordnet sein, dass die Kombination von Bildaufnahmen der separaten Kameras das gesamte für die jeweilige Anwendung aufzunehmende Gesichtsfeld derart lückenlos abbildet, dass sich mindestens Randbereiche der kombinierten Bildaufnahmen der Sensorarrays aus unterschiedlichen Kameras überlappen.

In einer Ausführung zur Erhöhung der Schwadweite in Flugrichtung, bei der das gesamte für die jeweilige Anwendung abzubildende Gesichtsfeld als ACT-Schwadweite mittels nur einer Sensorarraylänge aufnehmbar ist, wird die erhöhte ALT-Schwadweite vorzugsweise durch eine Kombination von mindestens zwei Sensorarrays innerhalb mindestens zweier Kameras zusammengesetzt.
In einer Ausführung zur Erhöhung der Schwadweite quer zur Flugrichtung, bei der das gesamte für die jeweilige Anwendung abzubildende Gesichtsfeld als ALT-Schwadweite mittels nur einer Sensorarraybreite aufnehmbar ist, wird die Erhöhung der ACT-Schwadweite vorteilhaft durch Zusammensetzung einer Kombination von mindestens zwei Sensoren innerhalb mindestens zweier Kameras erreicht.

Für eine erhöhte Schwadweite in Flugrichtung und quer dazu ist das gesamte für die jeweilige Anwendung abzubildende Gesichtsfeld sowohl in ALT- als auch in ACT-Schwadweite jeweils durch eine Kombination von mindestens zwei Sensorarrays innerhalb mindestens zweier Kameras zusammengesetzt.

In einer speziellen Gestaltung zur Aufnahme winkelabhängiger optischer Messgrößen ist das abzubildende Gesichtsfeld vorteilhaft in der ACT-Schwadweite durch lückenlos angeordnete Sensorarrays aufnehmbar und in der ALT-Schwadweite ist wenigstens eine Lücke zwischen Sensorarrays für die Aufnahme der Messgrößen unter unterschiedlichen Winkeln zur Oberfläche des Himmelskörpers in Flugrichtung vorhanden.

In einer besonderen Vorzugsvariante werden alle Sensorarrays der separaten Kameras zeitgleich ausgelesen. Es kann sich jedoch aus technologischen und/oder Kostengründen als zweckmäßig erweisen, dass wenigstens einige Gruppen von Sensorarrays, die das Gesichtsfeld in ACT-Schwadweite lückenlos abdecken, aufeinanderfolgend auslesbar sind (z.B. um teure optische Filter für alle Kamerastrahlengänge aufeinanderfolgend mehrfach zu nutzen).

Um die für das Grundprinzip der Erfindung erforderlichen inhaltsgleichen Fokalebenen zu schaffen, können die parallel ausgerichteten optischen Achsen der separaten Kameras vorteilhaft mittels eines gemeinsamen optischen System realisiert und mindestens ein nachfolgender Strahlteiler zur Erzeugung der abbildungsgleichen Fokalebenen aufgeteilt werden. Diese Gestaltung lässt sich jedoch aufgrund der Lichtleitung im Strahlteiler nur für wenige separate Kameras realisieren.
In einer anderen zweckmäßigen Realisierungsform haben alle Kameras ein und dasselbe optische Abbildungssystem, das in der Fokalebene das gleiche optisch korrigierte Bildfeld aufweist.
Besonders vorteilhaft erweist es sich jedoch, wenn die optischen Systeme der separaten Kameras, da deren Fokalebenen nur teilweise mit abtastenden Sensorarrays bestückt sind, nicht flächendeckend vollständig optisch korrigierte Fokalebenen aufweisen. In einem solchen Fall weist vorzugsweise mindestens eine Kamera ein optisches System auf, das ein nur teilweise optisch korrigiertes Bildfeld für den mit Sensorarrays belegten Bereich der Fokalebene besitzt und sich dadurch von mindestens einer zweiten im optischen Instrument verwendeten Kamera unterscheidet, in der ein anderer Bereich der Fokalebene (entsprechend der komplementär zur ersten Kamera vorhandenen Bestückung mit Sensorarrays) korrigiert ist.

Die Erfindung basiert auf der Grundüberlegung, dass der Nachteil der Bildverzerrung durch Einsatz mehrerer gegeneinander geneigter Kameras zur Gesichtsfeldvergrößerung eines satellitengestützten optischen Instruments nur umgangen werden kann, wenn eine Optik die gesamte abzubildende Schwadweite auf eine entsprechend große Fokalebene korrigiert abbildet. Das optisch korrigierte Bildfeld kann dabei jedoch von einem lichtempfindlichen Sensorarray mit kostengünstiger verfügbarer Größe nur zu einem Bruchteil abgedeckt werden, so dass mehrere Sensorarrays eingesetzt werden müssen, die sich jedoch aufgrund der Anschlussbedingungen eines Sensorchips nur mit erheblichen Lücken zwischen den Sensorarrays installieren lassen. die Erfindung löst dieses Problem, indem das gesamte korrigierte Bildfeld durch mehrere nicht zueinander verkippte (geneigte) Kameras mit objektseitig parallelen optischen Achsen aufgenommen wird, wobei in jeder Kamera jeweils ein anderer Teil der abbildungsgleichen Fokalebenen mit einem lichtempfindlichen Sensorarray bestückt wird. Mit Hilfe von weiteren Methoden zur Unterdrückung nicht erwünschter Abbildungsverzerrungen (z.B. zur Kompensation der Oberflächenkrümmung des Himmelskörpers gemäß der nicht vorveröffentlichten Patentanmeldung DE 10 2008 030 727.0) kann das Bildfeld zusätzlich korrigiert werden. Von besonderem Vorteil ist, dass vorhandene Instrumente zur Beobachtung von Himmelskörpern nachgerüstet werden können, indem nur die Optik entsprechend einer vergrößerten Schwadweite angepasst wird, die vorhandene, teure und in der Entwicklung aufwendige Fokalebenenbaugruppe jedoch mit veränderter Positionierung der Sensoren weiterhin verwendet werden kann.

Mit der erfindungsgemäßen Lösung ist es möglich, eine Bildaufnahme zur Fernerkundung von Himmelskörpern zu realisieren, die eine große Schwadweite gestattet, ohne dass bei der Verknüpfung von mehreren separaten Aufnahmesystemen innerhalb des aufzunehmenden Gesichtsfeldes unterschiedliche Verzerrungen der Einzelaufnahmen entstehen, die eine nachfolgende Co-Registrierung der Bilddaten erschweren.

Die Erfindung soll nachstehend anhand von Ausführungsbeispielen näher erläutert werden. Die Zeichnungen zeigen:
- Fig. 1:: eine Prinzipansicht der erfindungsgemäßen Anordnung,
- Fig.2:: eine Darstellung des Standes der Technik mit überlappenden Sensorschaltkreisen,
- Fig. 3:: eine Darstellung der Verzerrung der optischen Abbildung bei geneigter optischer Achse gemäß dem Stand der Technik, *[ehem. Abb. 2a]*
- Fig.4:: eine Variante der Erfindung unter Verwendung von zwei Kameras, bei denen die ACT-Schwadweite durch eine ALT einzeilige Anordnung von Sensorarrays erhöht wird, bei der eine Kamera zwei äußere Teilbereiche und die andere Kamera den dazwischen liegenden mittleren Teilbereich der Fokalebene abdeckt,
- Fig. 5:: eine Ausgestaltung der Erfindung unter Verwendung von zwei Kameras, bei denen die ALT-Schwadweite durch eine ALT vierzeilige Anordnung von Sensorarrays erhöht wird, bei der jede Kamera zwei ALT außermittig angeordnete Sensorarrays so aufweist, dass die technologisch bedingte ALT-Lücke jeweils durch die andere spiegelsymmetrisch mit Sensorarrays bestückte Kamera geschlossen wird,
- Fig. 6:: eine Ausgestaltung der Erfindung mit erhöhter ACT- und ALT-Schwadweite unter Verwendung von vier Kameras, bei denen sich vier Kameras mit jeweils vier versetzt angeordneten Sensorarrays zu einer ACT zweireihigen und ALT achtzeiligen lückenlosen Konfiguration ergänzen,
- Fig. 7:: eine Darstellung mit drei Kameras, die bei gleichem Gesichtsfeld (FoV) zur Erhöhung der Schadweite so angeordnet und aufgebaut sind, dass die Kameras aufgrund ihrer unterschiedlichen Abtastbereiche innerhalb der äquivalenten Fokalebenen lediglich partiell vollständig korrigierte Abbildungsoptiken aufweisen.

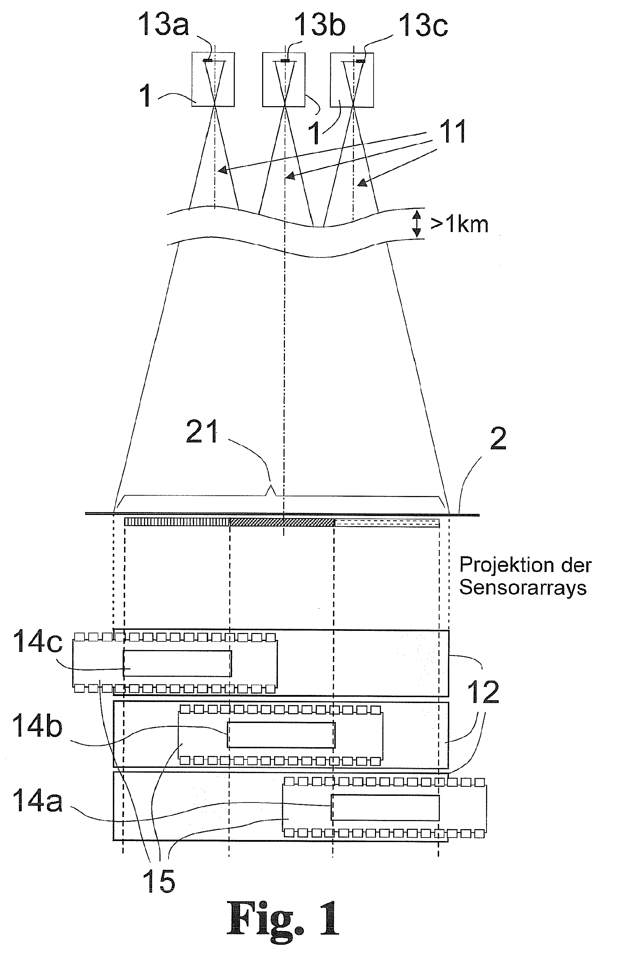

Die Anordnung besteht - wie in Fig. 1 für drei Kameras 1 dargestellt - in ihrem Grundaufbau aus mehreren Kameras 1, die derart angeordnet sind, dass ihre optischen Achsen 11 parallel zueinander verlaufen. Der Versatz der Kameras 1 zueinander führt aufgrund des großen Abstandes (> 1 km) von dem abzubildenden Objekt (Oberfläche des Himmelskörpers 2) zu keinem Versatz der Gesichtsfelder 21 der einzelnen Kameras 1 untereinander. Damit haben alle Kameras 1 dasselbe Gesichtsfeld 21 auf die zu beobachtende Oberfläche des Himmelskörpers 2. Die Fokalebenen der Kameras 1 sind jeweils nur in Teilbereichen 13a, 13b und 13c mit Sensorarrays 14 bestückt, wobei die Position dieser messfähigen Teilbereiche 13a, 13b und 13c in der jeweiligen Fokalebene 12 jeder Kamera 1 derart unterschiedlich ist, dass die lichtempfindlichen Flächen der Sensorchips 14 (Sensorarrays 14a, 14b und 14c) in mindestens einer Dimension der Schwadweite (ACT oder/und ALT) die inhaltsgleiche Fokalebene 12 lückenlos abdecken, indem sie sich reihenweise (ALT) oder zeilenweise (ACT) systematisch (vorzugsweise mit geringer Überlappung) ergänzen.
In Summe decken die unterschiedlich positionierten Sensorarrays 14a, 14b und 14c somit einen größeren Teil des gemeinsamen (für alle Kameras 1 übereinstimmenden) Gesichtsfeldes 21 ohne Verzerrungen ab. In Fig.1 1 wird also mittels dreier unterschiedlich positionierter Sensorarrays 14a, 14b und 14c in einem deckungsgleichen Gesichtsfeld 21 von drei separaten Kameras 1 die aufgenommene Schwadweite 3 (nur als ACT-Schwadweite 31 gezeichnet) ohne Verzerrung durch Kameraneigung (Verkippung gegenüber dem Lot auf die Objektebene auf der Oberfläche des Himmelskörpers 2) erreicht.

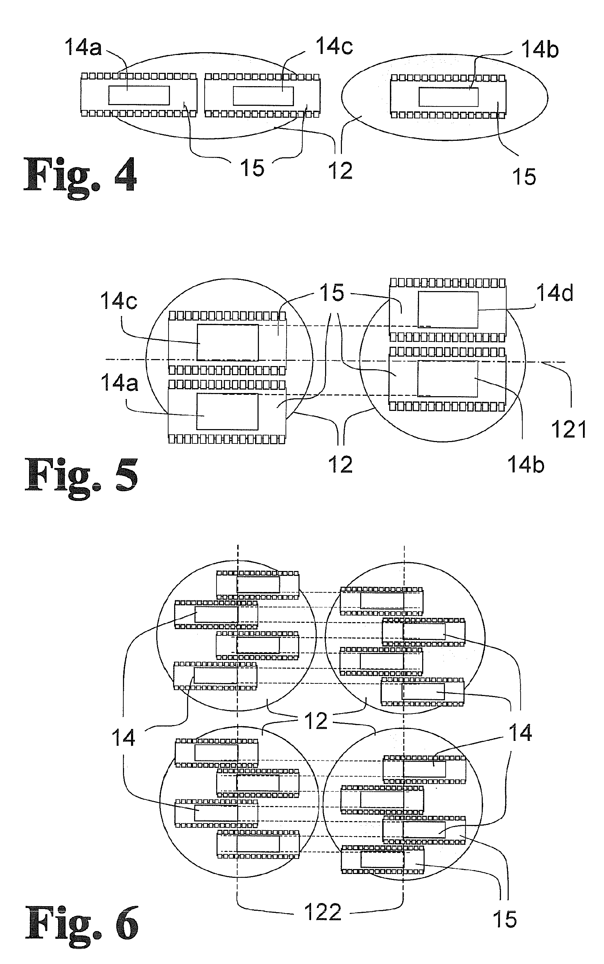

Das in Fig. 1 allgemein darstellte Prinzip der Erfindung kann sowohl in Flugrichtung (ALT) als auch in Querrichtung dazu (ACT) angewandt werden. Hierzu sind jeweils mindestens zwei Fokalebenen 12 (von separaten Kameras 1) erforderlich, in denen unterschiedlich positionierte Sensorarrays 14 Bilddaten eines lückenlos erweiterten Bildfeldes aus demselben abgebildeten Gesichtsfeld 21 liefern, die bei der Co-Registrierung der Bilddaten ohne erheblichen rechnerischen Entzerrungsaufwand zusammengesetzt werden können.
Natürlich sind auch Kombinationen der Anordnung von Sensorarrays 14 für die Vergrößerung der ACT-Schwadweite 31 und der ALT-Schwadweite 32 möglich. Dabei sind mindestens vier Fokalebenen 21 notwendig, um das erweiterte Gesichtsfeld 21 lückenlos abzudecken. Letzteres wird in der nachfolgenden Beschreibung zu Fig. 6 noch genauer erläutert.

Für die Ausführung gemäß Fig. 4 wird angenommen, dass die gesamte erforderliche ALT-Schwadweite 32 durch ein in den Kameras 1 eingesetztes Sensorarray 14 abgedeckt werden kann. Für die gewünschte ACT-Schadweite 31 ist dies nicht der Fall. Um die gewünschte gesamte Schwadweite 3 im Gesichtsfeld 21 abzudecken, seien drei Sensorarrays 14 notwendig.
Die drei Sensorarrays 14a, 14b und 14c sind in ACT-Richtung linear angeordnet, um das Gesichtsfeld 21, das in den Fokalebenen 12 separater Kameras 1 identisch abgebildet wird, lückenlos mit der geforderten ACT-Schwadweite 31 aufzunehmen. Dazu müssen die Sensorarrays 14a, 14b und 14c auf wenigstens zwei Fokalebenen 12 unterschiedlicher Kameras 1 verteilt werden, da die lichtempfindlichen Sensorarrays 14 nur einen Bruchteil der Fläche der Sensorchips 15 betragen und sich deshalb nicht innerhalb der Fokalebene 12 einer einzigen Kamera 1 lückenlos positionieren lassen, ohne dass ein zeitlicher Versatz der Abtastung (wie in Fig. 2 gezeigt) in Kauf genommen werden muss.
In der in Fig. 4 gezeigten Variante wird unterstellt, dass das Verhältnis der ACT-Dimension des Sensorarrays 14 zur ACT-Dimension des gesamten Sensorchips 15 größer als 1:2 ist. Die optisch korrigierte Fokalebene 12 sei elliptisch geformt und für drei aneinandergereihte Sensorarrays 14 ausreichend dimensioniert.

Für das in Fig. 4 gewählte Beispiel der erforderlichen Schwadweite 31 ergibt sich damit die Positionierung von zwei Sensorarrays 14a und 14c, die entlang einer in ACT-Richtung ausgerichteten Geraden symmetrisch zur optischen Achse 11 in der Fokalebene 12 einer ersten Kamera 1 (in Fig. 4 nicht gezeichnet) angeordnet sind, und eines einzelnen Sensorarrays 14b, das entlang derselben ACT-Geraden symmetrisch zur optischen Achse 11 mittig in der Fokalebene 12 einer zweiten Kamera 1 (nicht gezeichnet) angebracht ist.

Die beschriebene lückenlose Anordnung der Sensorarrays 14a-14c innerhalb der virtuell überlagerten Fokalebenen 12 der separaten Kameras 1, schließt nicht aus, dass geringfügige Überlappung der abgetasteten Teilbereiche 13a, 13b und 13c innerhalb der inhaltsgleichen Abbildung desselben Gesichtsfeldes 21 auftreten dürfen. Dabei wäre dann der Abstand zwischen den Sensorarrays 14a und 14c kleiner als eine ACT-Sensorarraylänge zu wählen, um die Lücke in der Abdeckung der Fokalebene 12 der ersten Kamera 1 durch "überlappende Anordnung" des Sensorarrays 14b in der zweiten Kamera 1 zu schließen, da in die Fokalebenen 12 beider Kameras 1 jeweils dasselbe Gesichtsfeld 21 von der Oberfläche des Himmelskörpers 2 abgebildet wird.

Die gleichzeitig ausgelesenen Bilddaten aus den drei Sensorarrays 14a-14c ergeben bei der Zusammensetzung im nachfolgenden Prozess der Co-Registrierung eine verzerrungsfreie Abbildung der geforderten Schwadweite 3 von der Dimension einer ALT-Sensorarraybreite und drei ACT-Sensorarraylängen.

In der Ausführung, die in Fig. 5 dargestellt ist, wird angenommen, dass die gesamte erforderliche ACT-Schwadweite 31 durch das in den Kameras 1 eingesetzte Sensorarray 14 abgedeckt werden kann. Für die gewünschte ALT-Schadweite 3 sei dies nicht erfüllt. Um die gewünschte gesamte Schwadweite 3 im Gesichtsfeld 21 abzudecken, sollen vier Sensorarrays 14 ausreichend sein.
In diesem Beispiel können die vier Sensorarrays 14 ebenfalls auf zwei Fokalebenen 12 verteilt werden. Dabei wird unterstellt, dass das Verhältnis der ALT-Dimensionen von Sensorarray 14 zu Sensorchip 15 deutlich größer als 1:2 ist, so dass eine problemlose Kontaktierung von zwei benachbarten Sensorchips 15 möglich ist, wenn deren Sensorarrays 14 einen Abstand von genau einer ALT-Dimension der Sensorarrays 14 aufweisen.
In den Fokalebenen 12 von zwei separaten, ACT benachbart positionierten Kameras 1 werden die Sensorarrays 14a und 14c in einer ersten Kamera 1 (linke Darstellung von Fig. 5) so positioniert, dass sie in ALT-Schwadweite 32 in einer Reihe (Spalte) angeordnet sind und einen Abstand von höchstens einer ALT-Sensordimension aufweisen. Die zweite Kamera 1 (rechte Darstellung von Fig.5) enthält die Sensorarrays 14b und 14d, die bezüglich einer in den Fokalebenen 12 vorhandenen ALT-Mittellinie 121 spiegelsymmetrisch zur Position der Sensorarrays 14a und 14c angeordnet sind.
Die geforderte lückenlose Anordnung der Sensorarrays 14a-14d innerhalb der aufgrund desselben abgebildeten Gesichtsfeldes 21 virtuell überlagerten Fokalebenen 12 der separaten Kameras 1 schließt auch hier geringfügige Überlappung der von den Sensorarrays 14a bis 14d abgetasteten Teilbereiche 13a bis 13d (in Fig. 5 nicht bezeichnet) nicht aus, zumal ein geringerer Abstand zwischen den Sensorarrays 14a und 14c sowie 14b und 14d von weniger als einer ALT-Sensorarraybreite nützlich sein kann, um beispielsweise die Co-Registrierung bei der Weiterverarbeitung der Bilddaten zu prüfen und zu korrigieren.
Die gleichzeitig ausgelesenen Bilddaten aus den vier Sensorarrays 14a-14d ergeben bei der Zusammensetzung im nachfolgenden Prozess der Co-Registrierung eine verzerrungsfreie Abbildung der geforderten Schwadweite 3 von der Dimension einer ACT-Sensorarraylänge und vier ALT-Sensorarraybreiten.

In der Ausgestaltung gemäß Fig. 6 wird angenommen, dass die gesamte erforderliche ACT-Schwadweite 31 durch zwei in den Kameras 1 eingesetzte Sensorarray 14 abgedeckt werden kann. Dafür sind in jeweils zwei Kameras 1 (links oben und links unten bzw. rechts oben und rechts unten) bezüglich einer ACT-Mittellinie 122 der jeweiligen Fokalebenen 12 spiegelsymmetrisch abwechselnd positionierte Sensorarrays 14 in ACT-Richtung ohne Abstand (oder sogar mit einer geringen Überlappung) angeordnet und müssen deshalb aufgrund der Dimensionen der Sensorchips 15 in ALT-Richtung einen Abstand aufweisen, der jedoch höchstens einer ALT-Sensorarraybreite beträgt.
Für die gewünschte ALT-Schadwte 32 im Gesichtsfeld 21 (nicht dargestellt) sollen acht Sensorarrays 14 erforderlich sein. Um die gesamte Schwadweite 3 lückenlos abzudecken, sind sechzehn Sensorarrays 14 notwendig, die auf vier Fokalebenen 12 separater Kameras 1 verteilt werden. Dabei haben je zwei Kameras 1 (links oben und rechts oben bzw. links unten und rechts unten) bezüglich einer ALT-Mittellinie 121 der jeweiligen Fokalebenen 12 spiegelsymmetrisch abwechselnd positionierte Sensorarrays 14 mit einem ALT-Abstand von einer ALT-Sensorarraybreite.
Beim gleichzeitigen Auslesen der Bilddaten aus allen sechzehn Sensorarrays 14 ergibt sich im nachfolgenden Prozess der Co-Registrierung eine verzerrungsfreie Abbildung der geforderten Schwadweite 3 der Dimension von acht ALT-Sensorarraybreiten und zwei ACT-Sensorarraylängen.

Natürlich muss nicht das gesamte von den Optiken der Kameras 1 in den Fokalebenen 12 zur Verfügung gestellte Gesichtsfeld 21 durch die Gesamtheit aller Sensorarrays 14 abgedeckt werden. Je nach Anwendung kann auch die Abdeckung eines Teils des oben genannten Gesichtsfeldes 21 ausreichend sein. Dieser Fall kann beispielsweise bei der Erfassung eines blickwinkelabhängigen Reflexionsvermögens der Oberfläche eines Himmelskörpers 2 auftreten

In verschiedenen Ausprägungen der Erfindung können die Kameras 1 mit zueinander parallelen optischen Achsen 11 gleiche oder auch unterschiedliche optische Abbildungseigenschaften besitzen. So muss für jede einzelne Kamera 1 lediglich das von ihrem Sensorarray 14 genutzte Teilgesichtsfeld optisch korrigiert werden, nicht jedoch das gesamte Gesichtsfeld 21 der gesamten Kamera 1. Für die in Fig. 1 dargestellte Ausführung mit drei Kameras 1 mit parallelen optischen Achsen 11 bedeutet das, dass innerhalb jeder Kamera 1 nur die durch die einzelnen Sensorarrays 14 abgetasteten Bereiche des Gesichtsfeldes 21 im Optikdesign berücksichtigt werden müssen. So kann z.B. die Bildkorrektur der mittleren Kamera 1 auf den zentralen Teil der Fokalebene 12 begrenzt werden und die Bildkorrektur der beiden äußeren Kameras 1 kann sich auf die Korrektur der seitlichen Bereiche fern der optischen Achse 11 beschränken. Dadurch kann sich das Design der einzelnen Optiken vereinfachen. Außerdem können für jedes tatsächlich realisierte Teilgesichtsfeld des gesamten Gesichtsfeldes 21 angepasste Verzerrungseigenschaften (z.B. zur Berücksichtigung der Oberflächenkrümmung des Himmelskörpers 2) eingestellt werden.

Ein weiterer Vorteil dieser Ausgestaltung liegt darin, dass die Anzahl der verschiedenen eingesetzten Kameratypen reduziert werden kann. So ist es möglich, für den jeweiligen Randbereich einer großen Schwadweite 3 einen bestimmten Kameratyp zu benutzen und für die aufzunehmenden Gebiete, die näher am Abtastpunkt des Nadir sind, einen anderen Kameratyp zu verwenden.

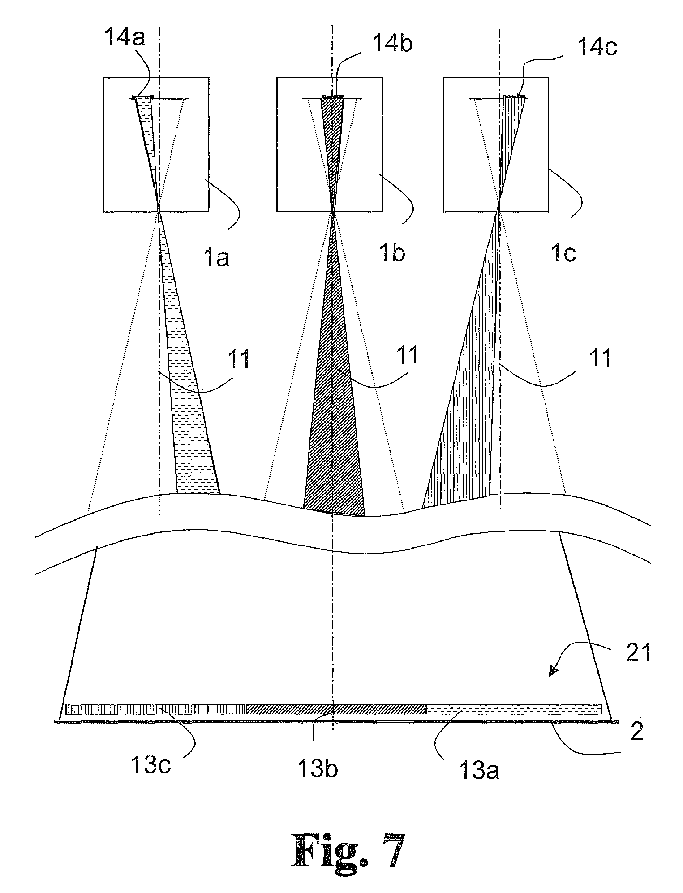

Natürlich können die von den Kameras 1 abgedeckten Abtast-Teilbereiche 13a, 13b, 13c usw. auch nicht lückenlos aneinandergrenzend oder überlappend sein, wenn die Anwendung dies zulässt, zum Beispiel bei Anwendungen, die die Winkelabhängigkeit des Albedo erfassen. Hierbei kann es ausreichend sein, dass durch einzelne (oder auch zusammenwirkende) Sensorflächen gebildete Teilbereiche 13a und 13c der abgebildeten Schwadweite 3 in ALT-Richtung ein nicht lückenloses Gesamtbild erzeugen. Diese Ausführung kann z.B. dadurch erzeugt werden, dass in Fig. 7 unterstellt wird, dass die Kameras 1 mit den Sensoren 14a bis 14c in Flugrichtung angeordnet sind und die mittlere Kamera 1 mit dem Sensor 14 inaktiv oder nicht vorhanden ist. Mit Hilfe der großen Ausdehnung des Gesichtsfeldes 21 in ALT-Richtung wird bei dieser Ausführung ein und derselbe Bodenpunkt unter unterschiedlichen Blickwinkeln betrachtet und die Winkelabhängigkeit des Reflexionsvermögens (Albedo) erfasst. In der Praxis ist es auch für andere Messgrößen oft ausreichend, eine Winkelabhängigkeit in einer bestimmten Winkelauflösung (z.B. einen Datenpunkt alle 10 Winkelgrad) zu erfassen. Somit müssen in diesem Spezialfall nur einzelne Sensoren bestimmte Abtastbereiche der ALT-Schwadweite 32 abdecken. Toleriert also die spezielle Messaufgabe eine lückenhafte Aufnahme, so müssen die Sensorarrays nicht zwangsläufig über die gesamte Schwadweite 3 völlig lückenlos verteilt über die separaten Kameras 1 angeordnet sein. Es ist demnach vollkommen ausreichend, wenn dies für die abzudeckenden Teilbereiche innerhalb der (inhaltsgleichen) Fokalebenen 12 der Kameras erfüllt ist.
In ACT Richtung muss dagegen eine lückenlose Abdeckung gegeben sein, insofern dies zur Erfüllung der Beobachtungsaufgabe vonnöten ist. In der Regel soll die ACT-Schwadweite 31 ein durchgehender, d.h. lückenloser Abtaststreifen aufgenommen werden. Ist dies der Fall, so muss ACT eine lückenlose Abbildung durch Überlappung oder lückenlose Anordnung der Sensorarrays 14 verteilt über die einzelnen Kameras 1 erfolgen.

Im Idealfall werden alle Sensorarrays 14a, 14b, 14c usw. innerhalb aller Kameras 1 gleichzeitig belichtet. In diesem Fall ergibt sich eine nahezu perfekte Co-Registrierung der Rohdaten. Konstruktive Randbedingungen können dazu führen, dass von diesem Idealfall abgewichen werden muss.
Ist in einem Abtastsystem aus beispielsweise zwei Kameras 1 die Möglichkeit zur Aufnahme unterschiedlicher Spektralkanäle oder Polarisationsrichtungen über ein Filterrad implementiert, müssten - um den Idealfall der gleichzeitigen Bildaufnahme einzustellen - die verschiedenen Filter im Filterrad dupliziert vorliegen, um im selben Spektralbereich die gleichzeitige Aufnahme der Kameras 1 zu ermöglichen. Hierbei ergibt sich der Nachteil, dass für die beiden Kameras 1 unterschiedliche Filterpaare Verwendung finden, zwischen denen erhöhte Anforderungen an die Homogenität der Filter zu stellen sind, so dass der Vorteil der gleichzeitigen Bildaufnahme gegenüber dem Nachteil der wesentlich erhöhten Aufwendungen für die doppelte Filterausstattung abgewägt werden muss.

Letztendlich kann es also vorteilhaft sein, abweichend vom Idealfall der gleichzeitigen Aufnahme, komplementäre Bildbereiche 13a, 13b, usw. zeitversetzt aufzunehmen und den aufgrund der translatorischen Flugbewegung des das Kamerasystem tragenden Flugkörpers eingefügten räumlichen Versatz zwischen den Aufnahmen der einzelnen Kameras 1 durch angepasste Platzierung der Sensorarrays 14a, 14b usw. und eine zeit- bzw. ortsgerecht verkämmte Bilddatenverknüpfung zu kompensieren, so dass im Ergebnis wiederum eine der Anwendung entsprechende, lückenlose (oder überlappende) Gesamtbildaufnahme aus den Einzelabtastungen der Sensorarrays 14a, 14b usw. der separaten Kameras 1 entsteht.

### Bezugszeichenliste

- 1: Kamera
- 11: optische Achse
- 12: Fokalebene
- 121: ALT-Mittellinie
- 122: ACT-Mittellinie
- 13a, b, c: Teilbereich (der Fokalebene)
- 14: Sensorarray
- 14a, b, c, d: Sensorarray
- 15: Sensorchip
- 16: Anschlüsse

- 2: Oberfläche (des Himmelskörpers)
- 21: Gesichtsfeld (Field of View)

- 3: Schwadweite
- 31: ACT-Schwadweite
- 32: ALT-Schwadweite

## Patentansprüche

1. Anordnung zur flugkörpergestützten Bilddatenaufnahme von der Oberfläche eines Himmelskörpers, bei der ein optisch abbildendes Instrument mehrere Sensorarrays aufweist, um für jeden Überflug das Gesichtsfeld der Bildaufnahme in Flugrichtung oder quer dazu unter Beibehaltung der erforderlichen Auflösung zu vergrößern, **dadurch gekennzeichnet, dass**
- mindestens zwei separate Kameras (1) mit zueinander parallelen optischen Achsen (11) zur Aufnahme desselben Gesichtsfeldes (21) angeordnet sind, so dass sie Fokalebenen (12) mit inhaltsgleichen Bildern des Gesichtsfeldes (21) von der Oberfläche des Himmelskörpers (2) aufweisen, und
- in der Fokalebene (12) jeder Kamera (1) Sensorchips (15) so angeordnet sind, dass eine aufgrund der beschränkten Fläche des aktiven Sensorarrays (14) des mindestens einen Sensorchips (15) in der Fokalebene (12) innerhalb einer ersten Kamera (1) vorhandene Abtastlücke durch das Anordnen von wenigstens einem komplementär versetzt positionierten aktiven Sensorarray (14) eines Sensorchips (15) in der abbildungsgleichen Fokalebene (12) mindestens einer zweiten Kamera (1) ausgefüllt ist, so dass das gesamte für die jeweilige Anwendung aufzunehmende Bild des Gesichtsfeldes (21) lückenlos erfassbar ist.

2. Anordnung nach Anspruch 1, **dadurch gekennzeichnet, dass**
die Sensorarrays (14) so angeordnet sind, dass die Kombination von Bildaufnahmen der separaten Kameras (1) das gesamte für die jeweilige Anwendung aufzunehmende Gesichtsfeld (21) ohne Überlappungen lückenlos abbildet.

3. Anordnung nach Anspruch 1, **dadurch gekennzeichnet, dass**
die Sensorarrays (14) so angeordnet sind, dass die Kombination von Bildaufnahmen der separaten Kameras (1) das gesamte für die jeweilige Anwendung aufzunehmende Gesichtsfeld (21) derart lückenlos abbildet, dass sich mindestens Randbereiche der kombinierten Bildaufnahmen der Sensorarrays (14) aus unterschiedlichen Kameras (1) überlappen.

4. Anordnung nach Anspruch 1, **dadurch gekennzeichnet, dass**
das gesamte für die jeweilige Anwendung abzubildende Gesichtsfeld (21) als ALT-Schwadweite (32) mittels eines Sensorarrays (14) aufnehmbar ist und die ACT-Schwadweite (31) durch eine Kombination von mindestens zwei Sensorarrays (14a, 14c; 14b) innerhalb mindestens zweier Kameras (1) zusammengesetzt ist.

5. Anordnung nach Anspruch 1, **dadurch gekennzeichnet, dass**
das gesamte für die jeweilige Anwendung abzubildende Gesichtsfeld (21) als ACT-Schwadweite (31) mittels eines Sensorarrays (14) aufnehmbar ist und die ALT-Schwadweite (32) durch eine Kombination von mindestens zwei Sensorarrays (14a, 14c; 14b, 14d) innerhalb mindestens zweier Kameras (1) zusammengesetzt ist.

6. Anordnung nach Anspruch 1, **dadurch gekennzeichnet, dass**
das gesamte für die jeweilige Anwendung abzubildende Gesichtsfeld (21) sowohl in ACT- als auch in ALT-Schwadweite (31; 32) jeweils durch eine Kombination von mindestens zwei Sensorarrays (14a, 14b, ...) innerhalb mindestens zweier Kameras (1) zusammengesetzt ist.

7. Anordnung nach Anspruch 1, **dadurch gekennzeichnet, dass**
das abzubildende Gesichtsfeld (21) für die Aufnahme winkelabhängiger optischer Messgrößen in der ACT-Schwadweite (31) durch lückenlos angeordnete Sensorarrays (14) aufnehmbar ist und in der ALT-Schwadweite (32) wenigstens eine Lücke zwischen Sensorarrays (14) für die Aufnahme von Messgrößen unter unterschiedlichen Winkeln zur Oberfläche des Himmelskörpers (2) vorhanden ist.

8. Anordnung nach Anspruch 1, **dadurch gekennzeichnet, dass**
alle Sensorarrays (14) zeitgleich auslesbar sind.

9. Anordnung nach Anspruch 1, **dadurch gekennzeichnet, dass**
wenigstens Gruppen von Sensorarrays (14), die das Gesichtsfeld (21) in ACT-Schwadweite (31) lückenlos abdecken, aufeinanderfolgend auslesbar sind.

10. Anordnung nach Anspruch 1, **dadurch gekennzeichnet, dass**
die parallel ausgerichteten optischen Achsen (11) der separaten Kameras (1) mittels eines gemeinsamen optischen Systems realisiert sind und mindestens ein nachfolgender Strahlteiler zur Erzeugung der abbildungsgleichen Fokalebenen (12) vorhanden ist.

11. Anordnung nach Anspruch 1, **dadurch gekennzeichnet, dass**
alle Kameras (1) in der Fokalebene (12) das gleiche optisch korrigierte Bildfeld aufweisen.

12. Anordnung nach Anspruch 1, **dadurch gekennzeichnet, dass**
mindestens eine Kamera (1) ein optisches System aufweist, das ein nur teilweise optisch korrigiertes Bildfeld für den mit Sensorarrays (14) belegten Bereich der Fokalebene besitzt und sich **dadurch** von mindestens einer zweiten im optischen Instrument verwendeten Kamera (1) unterscheidet.
